# EUROPEAN PATENT APPLICATION

(11) **EP 4 772 970 A1**
(43) Date of publication of application: **08.07.2026**
(21) Application number: 24872769.5
(22) Date of filing: 04.09.2024
(51) Int. Cl.: G06F 3/01

(54) **ELECTRONIC DEVICE, METHOD, AND COMPUTER-READABLE STORAGE MEDIUM FOR CONTROLLING ACTUATOR**

(30) Priority: 27.09.2023 KR 20230131267; 06.11.2023 KR 20230151957
(71) Applicant: Samsung Electronics Co., Ltd., Suwon-si, Gyeonggi-do 16677 (KR)
(72) Inventor: JANG, Hyunsoo, Suwon-si Gyeonggi-do 16677 (KR); KIM, Taesik, Suwon-si Gyeonggi-do 16677 (KR)
(74) Representative: Gulde & Partner
(86) International application number: PCT/KR2024/013359
(87) International publication number: WO 2025/071061

(57) **Abstract**

According to an embodiment, an electronic device comprises: a plurality of housings; a microphone; an actuator; and a processor operably coupled with the microphone and the actuator. The processor is configured to identify the state of the electronic device on the basis of the positional relationship between the plurality of housings. The processor is configured to drive the actuator within a first frequency range identified through the microphone, on the basis of the state of the electronic device being a first state. The processor is configured to, on the basis of the state of the electronic device being a second state, drive the actuator within a second frequency range identified through the microphone and distinguished from the first frequency range. Various other embodiments are possible.

## Description

### [Technical Field]

The following descriptions relate to an electronic device, a method, and a computer readable storage medium for controlling an actuator.

### [Background Art]

The form and/or size of an electronic device are diversifying. To enhance mobility, the electronic device with a decreased size and/or a decreased volume is being designed. As a position of housings of the electronic device is changed, various states may be provided.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

According to an embodiment, an electronic device may include a plurality of housings, a microphone, an actuator, and a processor operably coupled with the microphone and the actuator. The processor may be configured to identify, based on a position relationship of the plurality of housings, a state of the electronic device. The processor may be configured to, based on the state of the electronic device being a first state, drive the actuator in a first frequency range identified through the microphone. The processor may be configured to, based on the state of the electronic device being a second state, drive the actuator in a second frequency range distinct from the first frequency range, identified through the microphone.

According to an embodiment, a method performed by an electronic device may include identifying, based on a position relationship of a plurality of housings of the electronic device, a state of the electronic device. The method may include, based on the state of the electronic device being a first state, driving an actuator in a first frequency range identified through a microphone of the electronic device. The method may include, based on the state of the electronic device being a second state, driving the actuator in a second frequency range distinct from the first frequency range, identified through the microphone.

According to an embodiment, a non-transitory computer readable storage medium may store one or more programs. The one or more programs may include instructions, which, when being executed by a processor of an electronic device with a plurality of housings, a microphone, and an actuator, cause the electronic device to identify, based on a position relationship of the plurality of housings, a state of the electronic device. The one or more programs may include instructions, which, when being executed by the processor, cause the electronic device to, based on the state of the electronic device being a first state, drive the actuator in a first frequency range identified through the microphone. The one or more programs may include instructions, which, when being executed by the processor, cause the electronic device to, based on the state of the electronic device being a second state, drive the actuator in a second frequency range distinct from the first frequency range, identified through the microphone.

### [Description of the Drawings]

FIG. 1 is a block diagram of an electronic device in a network environment according to an embodiment.
FIG. 2A is a simplified block diagram of an electronic device according to an embodiment.
FIG. 2B illustrates an intensity of a vibration according to a vibration frequency, according to an embodiment.
FIG. 3 is a simplified block diagram of an electronic device according to an embodiment.
FIG. 4 illustrates a flowchart of an operation of an electronic device according to an embodiment.
FIG. 5 illustrates an example of a vibration intensity according to a state of an electronic device according to an embodiment.
FIG. 6 illustrates a flowchart of an operation of an electronic device according to an embodiment.
FIG. 7 illustrates a volume of sound obtained while a vibration is provided, according to an embodiment.
FIG. 8 illustrates an example of an electronic device including an actuator, according to an embodiment.
FIG. 9 illustrates an example of an electronic device including an actuator, according to an embodiment.
FIG. 10 illustrates an example of an electronic device including an actuator, according to an embodiment.

### [Mode for Invention]

Hereinafter, an embodiment of the present disclosure will be described in detail with reference to the drawings so that those having ordinary knowledge in the art to which the present disclosure belongs may easily implement it. However, the present disclosure may be implemented in various different forms and is not limited to the embodiment described herein. In association with a description of the drawings, the same or similar reference numerals may be used for the same or similar components. In addition, in the drawing and the associated description, a description of well-known functions and configurations may be omitted for clarity and brevity.

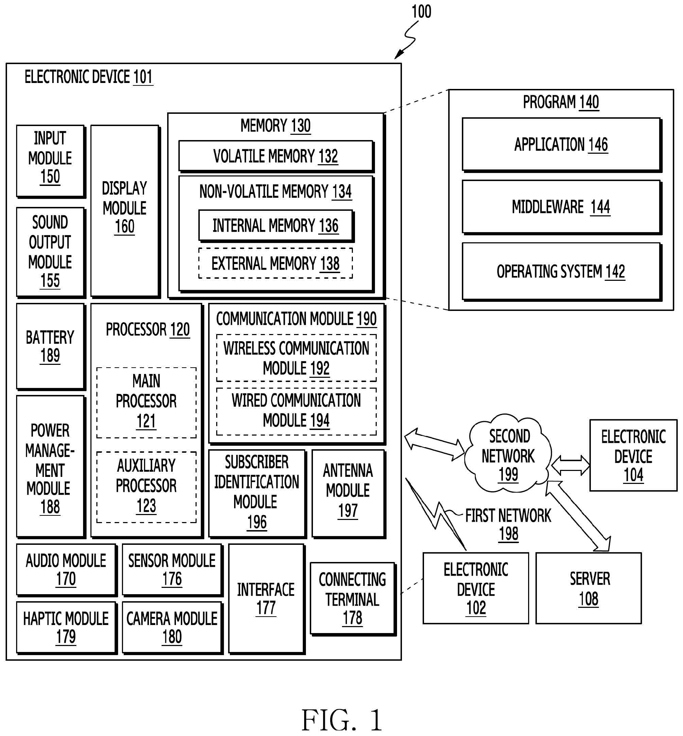

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following specification, an electronic device (e.g., the electronic device 101 of FIG. 1) for outputting a vibration is described. The electronic device may include a plurality of housings. The plurality of housings may have various position relationships. A state of the electronic device may be variously configured according to the various position relationships of the plurality of housings. For example, in a case that the electronic device is a foldable device, the state of the electronic device may include a folded state and an unfolded state. For example, in a case that the electronic device is a rollable device, the state of the electronic device may include an extended state (or an extended position) and a retracted state (or a retracted position).

In a case that the state of the electronic device is changed, a resonant frequency may be changed. Accordingly, even in a case that the state of the electronic device is changed, in a case that a vibration is outputted in the same frequency range, an intensity of the vibration may be weakened. Accordingly, technical features for setting a vibration frequency based on the state of the electronic device will be described below.

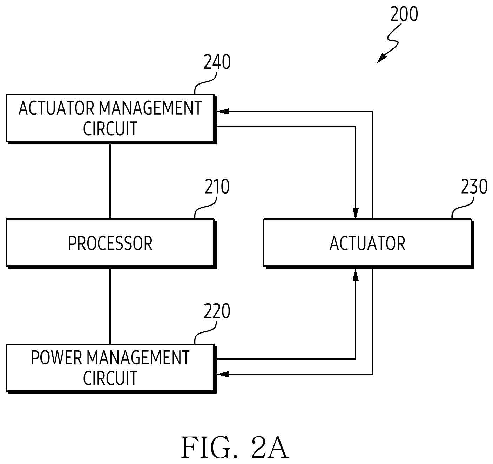

FIG. 2A is a simplified block diagram of an electronic device according to an embodiment.

Referring to FIG. 2A, an electronic device 200 may include a processor 210, a power management circuit 220, an actuator 230, and/or an actuator management circuit 240. According to an embodiment, the electronic device 200 may include at least one of the processor 210, the power management circuit 220, the actuator 230, and the actuator management circuit 240. For example, at least some of the processor 210, the power management circuit 220, the actuator 230, and the actuator management circuit 240 may be omitted according to an embodiment. For example, the electronic device 200 may include at least some of the components of the electronic device 101 of FIG. 1. Although not illustrated, the electronic device 200 may include various components in addition to the processor 210, the power management circuit 220, the actuator 230, and the actuator management circuit 240.

According to an embodiment, the processor 210 may correspond to the processor 120 of FIG. 1. The processor 210 may be operatively (or operably) coupled with or connected with the power management circuit 220, the actuator 230, and the actuator management circuit 240. The processor 210 being operatively coupled with or connected with the power management circuit 220, the actuator 230, and the actuator management circuit 240 may mean that the processor 210 may directly or indirectly control the power management circuit 220, the actuator 230, and the actuator management circuit 240.

According to an embodiment, the processor 210 may be configured with at least one processor. For example, the processor 210 may be configured with a main processor that performs high-performance processing and an auxiliary processor that performs low-power processing.

According to an embodiment, the processor 210 may include a hardware component for processing data based on one or more instructions. The hardware component for processing the data may include, for example, an arithmetic and logic unit (ALU), a field programmable gate array (FPGA), and/or a central processing unit (CPU).

For example, the processor 210 may include an application processor, a supplementary processor (e.g., a sensor hub, a microcontroller unit (MCU)), a central processor unit (CPU), a neural processing unit (NPU), and a graphic processing unit (GPU), and/or a processor for an IoT (e.g., a processor integrated with a communication module).

According to an embodiment, the electronic device 200 may include the power management circuit 220. For example, the power management circuit 220 may correspond to the power management module 188 of FIG. 1. For example, the power management circuit 220 may be referred to as a power management integrated circuit (PMIC). The power management circuit 220 may be used to obtain charge state information (e.g., life, overvoltage, low voltage, overcurrent, overcharge, over discharge, overheating, short circuit, or swelling) related to charging of a battery of the electronic device 200. For example, the power management circuit 220 may be used to operate the actuator 230. The power management circuit 220 may provide a voltage (or power) for driving the actuator 230.

According to an embodiment, the electronic device 200 may include the actuator management circuit 240. For example, the actuator management circuit 240 may be referred to as an actuator driver integrated circuit (an actuator driver IC). The actuator management circuit 240 may be used to control the actuator 230. The actuator management circuit 240 may identify a resonant frequency based on the driving of the actuator 230. For example, the actuator management circuit 240 may be connected with the actuator 230 based on a signal line and a feedback line for driving the actuator 230. According to an embodiment, the signal line and the feedback line may also be configured as a single line. The actuator management circuit 240 may identify (or measure) a back electromotive force (a back EMF) of the actuator 230.

According to an embodiment, the electronic device 200 may include the actuator 230. The actuator 230 may include a motor for providing a vibration. The actuator 230 may be used to convert an electrical signal into a vibration. A vibration may mean a mechanical stimulus that a user may perceive through tactile sensation or kinesthetic sensation. The actuator 230 may mean a device capable of transmitting a mechanical stimulus through a medium, not limited to a device that simply generates a vibration. Based on the vibration of the actuator 230, a vibration may be provided to the outside of the electronic device 200. For example, the actuator 230 may include a linear resonance actuator.

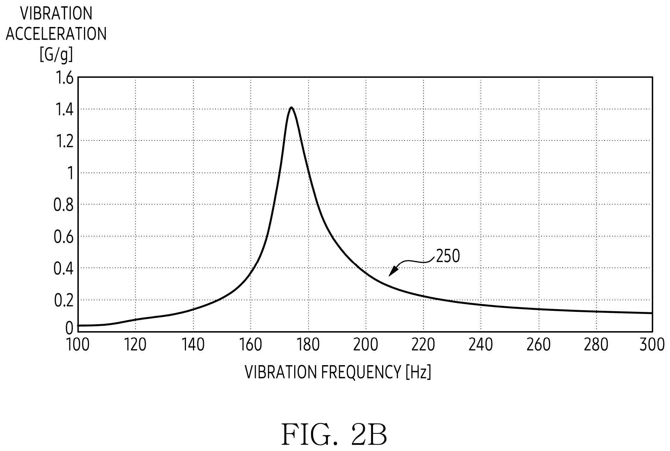

According to an embodiment, the processor 210 of the electronic device 200 may identify a resonant frequency of the electronic device 200 by using the actuator management circuit 240. The operation of the processor 210 to identify the resonant frequency of the electronic device 200 using the actuator management circuit 240 will be described in FIG. 2B.

FIG. 2B illustrates an intensity of a vibration according to a vibration frequency, according to an embodiment.

Referring to FIG. 2B, a graph 250 illustrates an intensity of a vibration according to a vibration frequency of the actuator 230. An x-axis of the graph 250 indicates a frequency. A unit of the x-axis is [Hz]. A y-axis of the graph 250 indicates vibration acceleration. A unit of the y-axis is [G/g].

Referring to the graph 250, the actuator 230 (or the electronic device 200) may have a resonant frequency. In a case that the vibration frequency of the actuator 230 is set to the resonant frequency, the strongest vibration force may be provided through the actuator 230. Accordingly, the processor 210 may identify the resonant frequency using the actuator management circuit 240. The processor 210 may identify the resonant frequency using the actuator management circuit 240 based on an algorithm for identifying the resonant frequency. According to the algorithm for identifying the resonant frequency, the processor 210 may output a vibration at a vibration frequency that may be supported by the actuator 230 through the actuator management circuit 240, and may identify an intensity of the vibration according to the vibration frequency. The processor 210 may identify the graph 250 based on the algorithm for identifying the resonant frequency. The processor 210 may identify a frequency at which the intensity of the vibration is identified as greatest, as a resonance frequency. The processor 210 may identify the resonant frequency as approximately 175 [Hz]. According to an embodiment, the actuator management circuit 240 may be connected with the actuator 230 through a separate feedback line. The actuator management circuit 240 may identify the resonant frequency using the feedback line. According to an embodiment, the actuator management circuit 240 may identify the resonant frequency based on the back EMF identified in the actuator 230.

As described in FIG. 2B, the electronic device 200 including the actuator management circuit 240 may identify the resonant frequency through the actuator management circuit 240. Unlike the electronic device 200, an electronic device that does not include an actuator management circuit may not identify the resonant frequency. For example, the resonant frequency may be changed as the state of the electronic device is changed. In a case that an actuator is not driven based on the resonant frequency, a maximum performance of the actuator may not be provided. For example, in a case that the actuator is configured as a linear resonance actuator, a vibration force at a linear resonant frequency may be significantly reduced in a frequency range other than a resonant frequency. Accordingly, hereinafter, technical features for identifying the resonant frequency in the electronic device that does not include an actuator management circuit will be described.

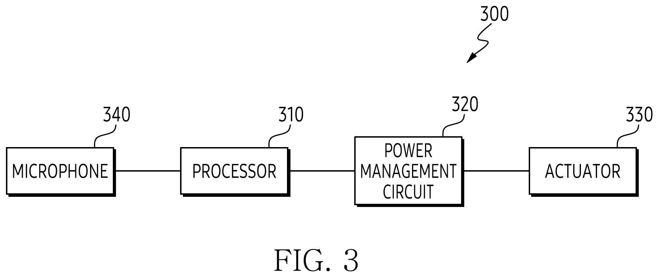

FIG. 3 is a simplified block diagram of an electronic device according to an embodiment.

Referring to FIG. 3, an electronic device 300 may be distinguished from the electronic device 200 illustrated in FIG. 2A. The electronic device 300 may not include an actuator management circuit 240.

According to an embodiment, the electronic device 300 may include a processor 310, a power management circuit 320, an actuator 330, and/or a microphone 340. According to an embodiment, the electronic device 300 may include at least one of the processor 310, the power management circuit 320, the actuator 330, and the microphone 340. For example, at least some of the processor 310, the power management circuit 320, the actuator 330, and the microphone 340 may be omitted according to an embodiment. For example, the electronic device 300 may include at least some of the components of the electronic device 101 of FIG. 1. Although not illustrated, the electronic device 300 may include various components in addition to the processor 310, the power management circuit 320, the actuator 330, and the microphone 340.

For example, the processor 310 may correspond to the processor 210 of FIG. 2A. As an example, the processor 310 may identify a volume of sound obtained through the microphone 340. The processor 310 may identify the volume of the sound based on data on the sound obtained through the microphone 340. The processor 310 may analyze the data on the sound obtained through the microphone 340.

For example, the power management circuit 320 may correspond to the power management circuit 220 of FIG. 2A. The actuator 330 may correspond to the actuator 230 of FIG. 2A.

According to an embodiment, the electronic device 300 may include the microphone 340. The microphone 340 may correspond to the input module 150 of FIG. 1. The microphone 340 may identify an electrical signal corresponding to vibration in air. For example, the processor 310 may identify sound (e.g., a voice of a user) generated from the user using the microphone 340. The processor 310 may transmit information on the sound generated from the user to an external electronic device. For example, the processor 310 may identify a volume of sound using the microphone 340 while the actuator 330 is driven to provide a vibration.

According to an embodiment, the electronic device 300 may not include an actuator management circuit (e.g., the actuator management circuit 240 of FIG. 2A). The actuator 330 may be controlled through the power management circuit 320. The processor 310 may not only provide a voltage (or power) to the actuator 330 by using the power management circuit 320, but also control the actuator 330. For example, the processor 310 may set a vibration frequency of the actuator 330 using the power management circuit 320.

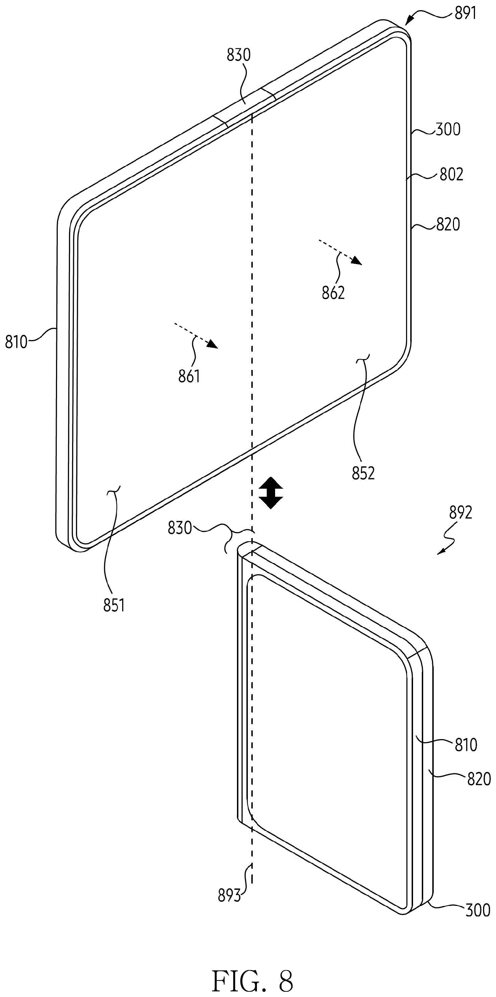

Although not illustrated, the electronic device 300 may have various shapes. The electronic device 300 may include a plurality of housings. The electronic device 300 may have a shape based on the plurality of housings. The plurality of housings may have various position relationships. A state of the electronic device 300 may be configured based on the position relationship of the plurality of housings. For example, based on the plurality of housings having a first position relationship, the state of the electronic device 300 may be identified as a first state. Based on the plurality of housings having a second position relationship, the state of the electronic device 300 may be identified as a second state. For example, the electronic device 300 may further include a foldable or rollable flexible display as the position relationship of the plurality of housings is changed. An example of the electronic device 300 having a shape based on the plurality of housings will be described later in FIGS. 8 to 10.

Although not illustrated, the electronic device 300 may further include various components. For example, the electronic device 300 may further include a sensor. For example, the sensor may be used to identify the position relationship of the plurality of housings of the electronic device 300. As an example, the sensor (e.g., a Hall sensor) may be used to identify an angle between the plurality of housings. The processor 310 may identify the position relationship (e.g., an angle between the housings) of the plurality of housings using the sensor, and set (or change) the vibration frequency of the actuator 330 based on the identified position relationship.

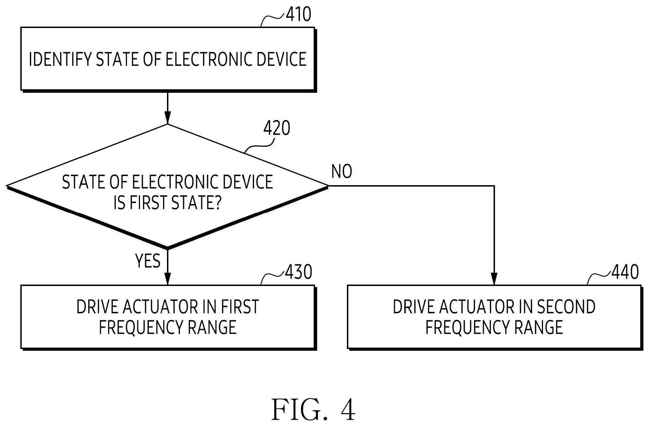

FIG. 4 illustrates a flowchart of an operation of an electronic device according to an embodiment. In the following embodiment, each of operations may be sequentially performed, but is not necessarily performed sequentially. For example, an order of each of the operations may be changed, and at least two operations may also be performed in parallel.

Referring to FIG. 4, in operation 410, a processor 310 may identify a state of an electronic device 300. For example, the processor 310 may identify the state of the electronic device 300 based on a position relationship of a plurality of housings.

According to an embodiment, the processor 310 may identify the state of the electronic device 300 as one of a first state in which the position relationship of the plurality of housings is a first position relationship and a second state in which the position relationship of the plurality of housings is a second position relationship. For example, the state of the electronic device 300 may be set based on the position relationship of the plurality of housings.

For example, the plurality of housings may include a first housing and a second housing. The electronic device 300 may include the first housing and the second housing. The electronic device 300 including the first housing and the second housing may have a foldable shape with respect to a vertical axis. The electronic device 300 may be referred to as a foldable device that is folded along the vertical axis. For example, the electronic device 300 may have an unfolded state and a folded state. The unfolded state may be an example of the above-described first state. The folded state may be an example of the above-described second state. A specific example of the electronic device 300 will be described later in FIG. 8.

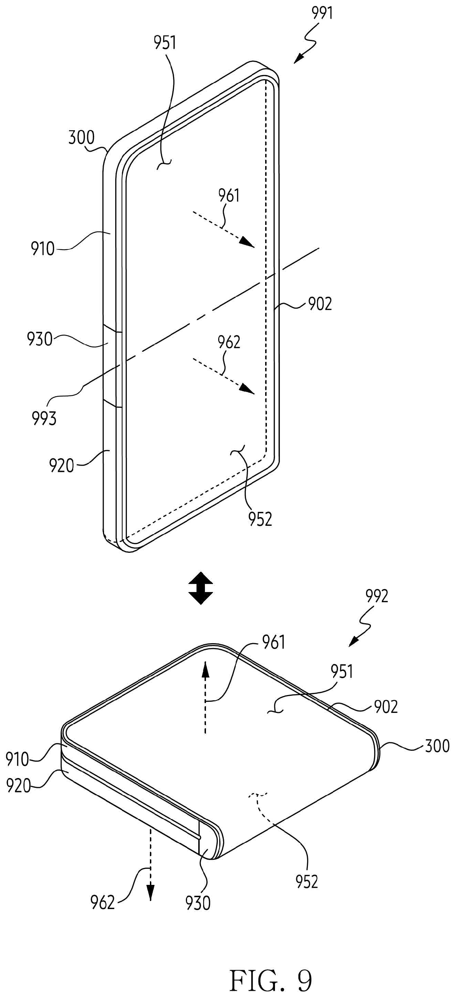

For example, the plurality of housings may include a first housing and a second housing. The electronic device 300 may include the first housing and the second housing. The electronic device 300 including the first housing and the second housing may have a foldable shape with respect to a horizontal axis. The electronic device 300 may be referred to as a foldable device that is folded along the horizontal axis. For example, the electronic device 300 may have an unfolded state and a folded state. The unfolded state may be an example of the above-described first state. The folding state may be an example of the above-described second state. A specific example of the electronic device 300 will be described later in FIG. 9.

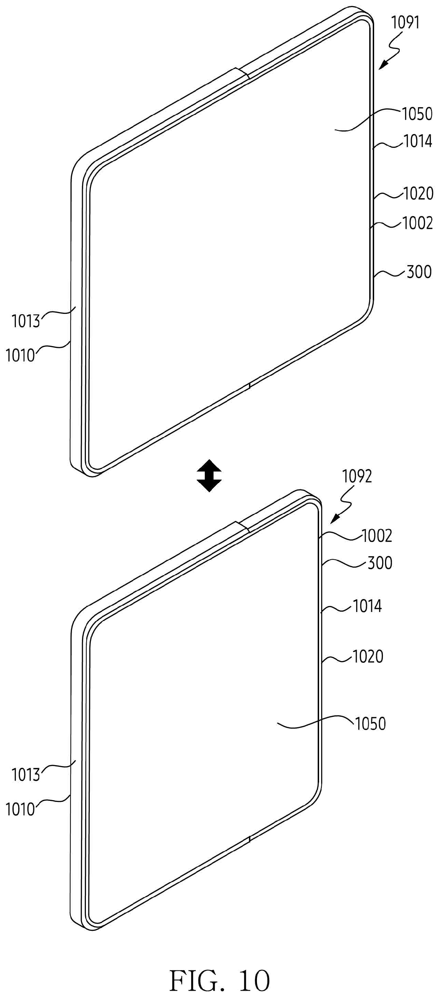

For example, the plurality of housings may include a first housing and a second housing. The electronic device 300 may include the first housing and the second housing. The second housing may be configured to be retractable into the first housing. The electronic device 300 may be referred to as a rollable device that provides an extended state (or an extended position) and a retracted state (or a retracted position). The extended state may be an example of the above-described first state. The retracted state may be an example of the above-described second state. A specific example of the electronic device 300 will be described later in FIG. 10.

In operation 420, the processor 310 may identify whether the state of the electronic device 300 is the first state. For example, the processor 310 may identify whether the state of the electronic device 300 is the first state based on identifying the state of the electronic device 300. For example, the processor 310 may identify whether the state of the electronic device 300 is the first state based on identifying whether the position relationship of the plurality of housings is the first position relationship.

According to an embodiment, the processor 310 may also identify whether the state of the electronic device 300 is the second state. For example, the processor 310 may identify whether the state of the electronic device 300 is the second state based on identifying whether the position relationship of the plurality of housings is the second position relationship.

In operation 430, when the state of the electronic device 300 is the first state, the processor 310 may drive an actuator 330 in a first frequency range. For example, the processor 310 may drive the actuator 330 in the first frequency range based on the state of the electronic device 300 being the first state.

According to an embodiment, the processor 310 may drive the actuator 330 based on the state of the electronic device 300 being the first state. The processor 310 may identify a first resonant frequency based on a volume of sound obtained using a microphone 340 while the actuator 330 is being driven. For example, the first resonant frequency may be included in the first frequency range.

According to an embodiment, the processor 310 may identify the first resonant frequency based on a first reference frequency and an adjusting frequency, while the state of the electronic device 300 is the first state. For example, the first reference frequency may be a frequency of a vibration outputted through the actuator 330 while the state of the electronic device 300 is the first state. For example, the first reference frequency may be a vibration frequency of the actuator 330.

For example, the processor 310 may identify a first tuning frequency smaller than the first reference frequency by an adjusting frequency. The processor 310 may identify a second tuning frequency greater than the first reference frequency by an adjusting frequency.

The processor 310 may drive the actuator 330 using a power management circuit 320 based on the first reference frequency. The processor 310 may identify a volume of sound obtained using the microphone 340 while the actuator 330 is being driven based on the first reference frequency. The processor 310 may identify a first value indicating a volume of sound obtained using the microphone 340 while the actuator 330 is being driven based on the first reference frequency.

The processor 310 may drive the actuator 330 using the power management circuit 320 based on the first tuning frequency. The processor 310 may identify a volume of sound obtained using the microphone 340 while the actuator 330 is being driven based on the first tuning frequency. The processor 310 may identify a second value indicating a volume of sound obtained using the microphone 340 while the actuator 330 is being driven based on the first tuning frequency.

The processor 310 may drive the actuator 330 using the power management circuit 320 based on the second tuning frequency. The processor 310 may identify a volume of sound obtained using the microphone 340 while the actuator 330 is being driven based on the second tuning frequency. The processor 310 may identify a third value indicating a volume of sound obtained using the microphone 340 while the actuator 330 is being driven based on the second tuning frequency.

The processor 310 may compare the first value, the second value, and the third value. The processor 310 may identify the largest value among the first value, the second value, and the third value. For example, the processor 310 may identify that the first reference frequency is close to a resonant frequency based on identifying that the first value is the largest among the first value, the second value, and the third value. The processor 310 may reduce the adjusting frequency based on identifying that the first reference frequency is close to the resonant frequency. The processor 310 may perform the above-described operation again based on the first reference frequency and the reduced adjusting frequency.

For example, the processor 310 may identify that the first tuning frequency is close to a resonant frequency based on identifying that the second value is the largest among the first value, the second value, and the third value. The processor 310 may set the first tuning frequency as the first reference frequency. The processor 310 may reduce the adjusting frequency based on setting the first tuning frequency as the first reference frequency. The processor 310 may perform the above-described operation again based on the first reference frequency (i.e., the first reference frequency set as the first tuning frequency) and the reduced adjusting frequency.

For example, the processor 310 may identify that the second tuning frequency is close to a resonant frequency based on identifying that the third value is the largest among the first value, the second value, and the third value. The processor 310 may set the second tuning frequency as the first reference frequency. The processor 310 may reduce the adjusting frequency based on setting the second tuning frequency as the first reference frequency. The processor 310 may perform the above-described operation again based on the first reference frequency (i.e., the first reference frequency set as the second tuning frequency) and the reduced adjusting frequency.

The processor 310 may repeatedly perform the above-described operation until the adjusting frequency becomes a designated frequency (e.g., '0') and may change the first reference frequency according to the above-described operation. For example, the processor 310 may identify the first reference frequency as a resonant frequency based on the adjusting frequency being a designated frequency (e.g., '0'). For example, the processor 310 may identify the first reference frequency close to a resonant frequency based on the adjusting frequency being a designated frequency (e.g., '0').

In operation 440, in a case that the state of the electronic device 300 is not the first state (e.g., the state of the electronic device 300 is the second state), the processor 310 may drive the actuator 330 in a second frequency range. For example, the processor 310 may drive the actuator 330 in the second frequency range based on the state of the electronic device 300 being the second state. For example, the second frequency range may be distinct from the first frequency range.

According to an embodiment, the processor 310 may drive the actuator 330 based on the state of the electronic device 300 being the second state. The processor 310 may identify a second resonant frequency based on a volume of sound obtained using the microphone 340 while the actuator 330 is being driven. For example, the second resonant frequency may be included in the second frequency range.

According to an embodiment, the processor 310 may identify the second resonant frequency based on a second reference frequency and an adjusting frequency while the state of the electronic device 300 is the second state. For example, the second reference frequency may be a frequency of a vibration outputted through the actuator 330 while the state of the electronic device 300 is the second state. For example, the second reference frequency may be a vibration frequency of the actuator 330.

For example, the processor 310 may identify a third tuning frequency smaller than the second reference frequency by an adjusting frequency. The processor 310 may identify a fourth tuning frequency greater than the second reference frequency by an adjusting frequency.

The processor 310 may drive the actuator 330 using the power management circuit 320 based on the second reference frequency. The processor 310 may identify a volume of sound obtained using the microphone 340 while the actuator 330 is being driven based on the second reference frequency. The processor 310 may identify a first value indicating a volume of sound obtained using the microphone 340 while the actuator 330 is being driven based on the second reference frequency.

The processor 310 may drive the actuator 330 using the power management circuit 320 based on the third tuning frequency. The processor 310 may identify a volume of sound obtained using the microphone 340 while the actuator 330 is being driven based on the third tuning frequency. The processor 310 may identify a second value indicating a volume of sound obtained using the microphone 340 while the actuator 330 is being driven based on the third tuning frequency.

The processor 310 may drive the actuator 330 using the power management circuit 320 based on the fourth tuning frequency. The processor 310 may identify a volume of sound obtained using the microphone 340 while the actuator 330 is being driven based on the fourth tuning frequency. The processor 310 may identify a third value indicating a volume of sound obtained using the microphone 340 while the actuator 330 is being driven based on the fourth tuning frequency.

The processor 310 may compare the first value, the second value, and the third value. The processor 310 may identify the largest value among the first value, the second value, and the third value. For example, the processor 310 may identify that the second reference frequency is close to a resonant frequency based on identifying that the first value is the largest among the first value, the second value, and the third value. The processor 310 may reduce the adjusting frequency based on identifying that the second reference frequency is close to the resonant frequency. The processor 310 may perform the above-described operation again based on the second reference frequency and the reduced adjusting frequency.

For example, the processor 310 may identify that the third tuning frequency is close to a resonant frequency based on identifying that the second value is the largest among the first value, the second value, and the third value. The processor 310 may set the third tuning frequency as the second reference frequency. The processor 310 may reduce the adjusting frequency based on setting the third tuning frequency as the second reference frequency. The processor 310 may perform the above-described operation again based on the second reference frequency (i.e., the second reference frequency set as the third tuning frequency) and the reduced adjusting frequency.

For example, the processor 310 may identify that the fourth tuning frequency is close to a resonant frequency based on identifying that the third value is the largest among the first value, the second value, and the third value. The processor 310 may set the fourth tuning frequency as a second reference frequency. The processor 310 may reduce the adjusting frequency based on setting the fourth tuning frequency as the second reference frequency. The processor 310 may perform the above-described operation again based on the second reference frequency (i.e., the second reference frequency set to the fourth tuning frequency) and the reduced adjusting frequency.

The processor 310 may repeatedly perform the above-described operation until the adjusting frequency becomes a designated frequency (e.g., '0') and may change the second reference frequency according to the above-described operation. For example, the processor 310 may identify the second reference frequency as a resonant frequency based on the adjusting frequency being a designated frequency (e.g., '0'). For example, the processor 310 may identify the second reference frequency close to the resonant frequency based on the adjusting frequency being a designated frequency (e.g., '0').

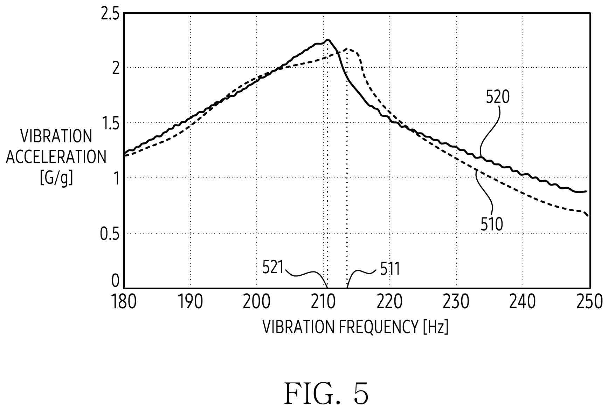

FIG. 5 illustrates an example of a vibration intensity according to a state of an electronic device according to an embodiment.

Referring to FIG. 5, a state of an electronic device 300 may be changed based on a position relationship of a plurality of housings of the electronic device 300. For example, in a case that the electronic device 300 has a shape foldable along a designated axis, the state of the electronic device 300 may include an unfolded state and a folded state. For example, in a case that a second housing of the electronic device 300 is configured to be retractable into a first housing of the electronic device 300, the state of the electronic device 300 may include an extended state and a retracted state of the electronic device 300.

As the state of the electronic device 300 is changed, the center of gravity of the electronic device 300 and/or a shape (or a path) in which a vibration is transmitted may be changed. A resonant frequency may be changed based on the change in the center of gravity of the electronic device 300 and/or the shape (or the path) in which a vibration is transmitted. Accordingly, in a case that a processor 310 drives an actuator 330 based on the same vibration frequency regardless of the state of the electronic device 300, an intensity (or a vibration force) of a vibration provided through the electronic device 300 may be reduced.

A graph 510 illustrates magnitude of vibration acceleration according to a vibration frequency of the actuator 330 in a first state (e.g., an unfolded state) of the electronic device 300. A graph 520 illustrates magnitude of vibration acceleration according to a vibration frequency of the actuator 330 in a second state (e.g., a folded state) of the electronic device 300. An x-axis of the graph 510 and the graph 520 is a vibration frequency (or a driving frequency) of the actuator 330. A unit of the x-axis is [Hz]. A y-axis of the graph 510 and the graph 520 is magnitude of vibration acceleration. A unit of the y-axis is [G/g].

The processor 310 may identify a frequency having the largest vibration acceleration as a resonant frequency. For example, when the state of the electronic device 300 is the first state, a resonant frequency may be identified as a frequency 511 (e.g., approximately 213 Hz). When the state of the electronic device 300 is the second state, a resonant frequency may be identified as a frequency 521 (e.g., approximately 210 Hz). As the state of the electronic device 300 is changed, the resonant frequency may be changed.

In a case that the vibration frequency of the actuator 330 is not changed according to the change in the state of the electronic device 300, loss of a vibration force (or vibration acceleration) may occur. For example, since a vibration force decreases sharply in a designated frequency interval according to characteristics of the actuator 330, a quality issue may occur.

Accordingly, the processor 310 may set the vibration frequency of the actuator 330 to a resonant frequency according to the state of the electronic device 300.

While the state of the electronic device 300 is the first state (e.g., an unfolded state), the processor 310 may drive the actuator 330 in a first frequency range. For example, the first frequency range may include a first resonant frequency. For example, the first frequency range may be set based on the first resonant frequency.

While the state of the electronic device 300 is the second state (e.g., a folded state), the processor 310 may drive the actuator 330 in a second frequency range. For example, the second frequency range may include a second resonant frequency. For example, the second frequency range may be set based on the second resonant frequency.

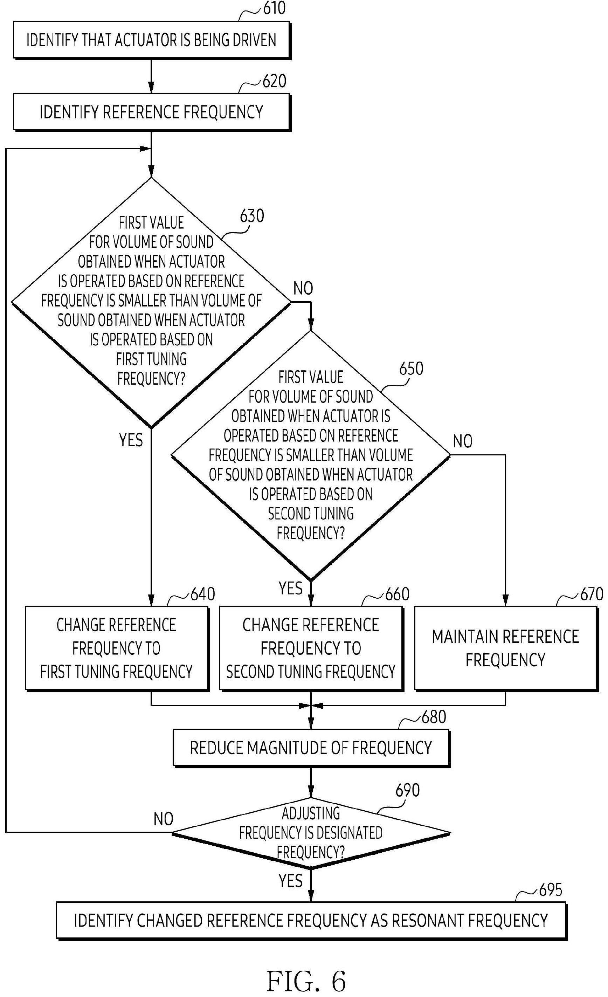

FIG. 6 illustrates a flowchart of an operation of an electronic device according to an embodiment. In the following embodiment, each of operations may be sequentially performed, but is not necessarily performed sequentially. For example, an order of each of the operations may be changed, and at least two operations may also be performed in parallel.

Referring to FIG. 6, operations of operation 610 to operation 695 may be performed to identify a resonant frequency of an electronic device 300. A processor 310 may identify a first resonant frequency when a state of the electronic device 101 is a first state by performing the operation 610 to the operation 695 while the state of the electronic device 300 is the first state. The processor 310 may identify a second resonant frequency when the state of the electronic device 300 is a second state by performing the operation 610 to the operation 695 while the state of the electronic device 300 is the second state.

In the operation 610, the processor 310 may identify that an actuator 330 is being driven. The processor 310 may perform an algorithm for identifying a resonant frequency based on identifying the driving of the actuator 330. The processor 310 may perform operation 620 to the operation 695 based on the algorithm for identifying a resonant frequency.

In the operation 620, the processor 310 may identify a reference frequency. For example, processor 310 may identify the reference frequency based on identifying that the actuator 330 is being driven. The processor 310 may identify the reference frequency as a vibration frequency of the actuator 330. According to an embodiment, the processor 310 may identify the reference frequency as an initial designated frequency. For example, the initial designated frequency may be changed based on the state of the electronic device 300. Magnitude of a first initial designated frequency set when the state of the electronic device 300 is the first state may be set to be greater than magnitude of a second initial designated frequency set when the state of the electronic device 300 is the second state. As an example, the first initial designated frequency may be set to be greater than the second initial designated frequency by 3 [Hz].

According to an embodiment, the processor 310 may perform operations described below while the state of the electronic device 300 is the first state. A reference frequency identified while the state of the electronic device 300 is the first state may be referred to as a first reference frequency. According to an embodiment, the processor 310 may perform operations described below while the state of the electronic device 300 is the second state. A reference frequency identified while the state of the electronic device 300 is the second state may be referred to as a second reference frequency.

In operation 630, the processor 310 may identify whether a first value for a volume of sound obtained when the actuator 330 is operated based on the reference frequency is smaller than a second value for a volume of sound obtained when the actuator 330 is operated based on a first tuning frequency.

According to an embodiment, the processor 310 may identify a first tuning frequency and a second tuning frequency based on a reference frequency and an adjusting frequency. The processor 310 may identify the first tuning frequency smaller than a reference frequency by an adjusting frequency. The processor 310 may identify the second tuning frequency greater than a reference frequency by an adjusting frequency.

In a first time interval within a time interval in which a vibration is provided (or outputted) through the actuator 330, the processor 310 may drive the actuator 330 based on the reference frequency. In a second time interval within a time interval in which a vibration is provided through the actuator 330, the processor 310 may drive the actuator 330 based on the first tuning frequency. In a third time interval within a time interval in which a vibration is provided through the actuator 330, the processor 310 may drive the actuator 330 based on the second tuning frequency. The first time interval, the second time interval, and the third time interval may be set based on a designated period.

While a vibration is provided through the actuator 330, the processor 310 may obtain sound (or vibration sound) generated by the vibration using a microphone 340. While a vibration is provided through the actuator 330, the processor 310 may identify a volume of the obtained sound.

For example, the processor 310 may identify a first value for a volume of sound obtained when the actuator 330 is operated based on the reference frequency. The processor 310 may identify a volume of vibration sound as the first value when the actuator 330 is operated based on the reference frequency. The processor 310 may identify a second value for a volume of sound obtained when the actuator 330 is operated based on the first tuning frequency. The processor 310 may identify a volume of vibration sound as the second value when the actuator 330 is operated based on the first tuning frequency.

Based on identifying whether the first value is smaller than the second value, the processor 310 may identify (or determine) whether the resonant frequency of the electronic device 300 is close to the reference frequency and whether the resonant frequency is close to the first tuning frequency.

In operation 640, in a case that the first value is smaller than the second value, the processor 310 may change the reference frequency to the first tuning frequency. The processor 310 may set the reference frequency to a value of the first tuning frequency. In order to perform the operation 630 to operation 690 again, the processor 310 may change the reference frequency to the first tuning frequency.

In operation 650, in a case that the first value is not smaller than the second value, the processor 310 may identify whether the first value for a volume of sound obtained when the actuator 330 is operated based on the reference frequency is smaller than a third value for a volume of sound obtained when the actuator 330 is operated based on the second tuning frequency. For example, based on identifying that the first value is greater than or equal to the second value, the processor 310 may identify whether the first value for a volume of sound obtained when the actuator 330 is operated based on the reference frequency is smaller than the third value for a volume of sound obtained when the actuator 330 is operated based on the second tuning frequency.

For example, the processor 310 may identify a first value for a volume of sound obtained when the actuator 330 is operated based on the reference frequency. The processor 310 may identify a volume of vibration sound as the first value when the actuator 330 is operated based on the reference frequency. The processor 310 may identify a third value for a volume of sound obtained when the actuator 330 is operated based on the second tuning frequency. The processor 310 may identify a volume of vibration sound as the third value when the actuator 330 is operated based on the second tuning frequency.

Based on identifying whether the first value is smaller than the third value, the processor 310 may identify (or determine) whether the resonant frequency of the electronic device 300 is close to the reference frequency and whether the resonant frequency is close to the second tuning frequency.

In operation 660, in a case that the first value is smaller than the third value, the processor 310 may change the reference frequency to the second tuning frequency. The processor 310 may set the reference frequency to a value of the second tuning frequency. In order to perform the operation 630 to the operation 690 again, the processor 310 may change the reference frequency to the second tuning frequency.

In operation 670, in a case that the first value is not smaller than the third value, the processor 310 may maintain the reference frequency. Based on identifying that the first value is greater than or equal to the third value, the processor 310 may maintain the reference frequency. For example, the processor 310 may maintain the reference frequency without changing it.

In operation 680, the processor 310 may reduce magnitude of an adjusting frequency. In order to identify an accurate resonant frequency, the processor 310 may reduce magnitude of an adjusting frequency. For example, the processor 310 may decrease the magnitude of the adjusting frequency by 1 [Hz].

In the operation 690, the processor 310 may identify whether the adjusting frequency is a designated frequency (e.g., 0 [Hz]).

According to an embodiment, the processor 310 may perform the operation 630 again based on identifying that the adjusting frequency is not a designated frequency (e.g., 0 [Hz]).

In the operation 695, in a case that the adjusting frequency is a designated frequency, the processor 310 may identify the reference frequency as a resonant frequency. For example, the processor 310 may identify the reference frequency as a resonant frequency based on identifying that the adjusting frequency is a designated frequency (e.g., 0 [Hz]).

According to an embodiment, in the operation 640, the reference frequency may be changed to the first tuning frequency. Accordingly, the processor 310 may identify the changed reference frequency (i.e., the first tuning frequency) as a resonant frequency. According to an embodiment, in the operation 660, the reference frequency may be changed to the second tuning frequency. The processor 310 may identify the changed reference frequency (i.e., the second tuning frequency) as a resonant frequency. According to an embodiment, in the operation 670, the reference frequency may be maintained. The processor 310 may identify the maintained reference frequency as a resonant frequency.

In order to prevent noise in a user environment, according to an embodiment, the processor 310 may perform filtering on sound obtained from the microphone 340. For example, the processor 310 may perform filtering on the obtained sound based on a frequency band identified based on the vibration frequency of the actuator 330. The frequency band identified based on the vibration frequency may be set from a frequency 5 [Hz] lower than the vibration frequency to a frequency 5 [Hz] higher than the vibration frequency.

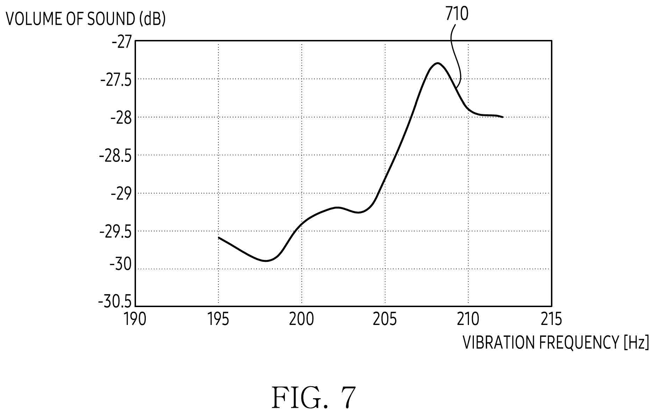

FIG. 7 illustrates a volume of sound obtained while a vibration is provided, according to an embodiment.

Referring to FIG. 7, a graph 710 illustrates an example of a volume of sound obtained by a microphone 340 according to a vibration frequency. An x-axis of the graph 710 indicates a frequency. A unit of the x-axis is [Hz]. A y-axis of the graph 710 indicates a volume of sound. A unit of the y-axis is [dB].

Referring to the graph 710, in a case that an actuator 330 is being driven based on a frequency of approximately 208 [Hz], a volume of sound (or vibration sound) generated by a vibration may be the highest. Accordingly, a processor 310 may identify approximately 208 [Hz] as a resonant frequency of an electronic device 300. The processor 310 may maximize the performance of the actuator 330 by driving the actuator 330 based on a resonant frequency. In addition, the processor 310 may identify a resonant frequency of the electronic device 300 using the microphone 340 without an actuator management circuit.

According to the above-described embodiment, the processor 310 may prevent breakage of a spring that occurs as the resonant frequency of the electronic device 300 (or the actuator 330) changes at a high temperature.

FIG. 8 illustrates an example of an electronic device including an actuator, according to an embodiment.

Referring to FIG. 8, an electronic device 300 may be a foldable device that is folded along a vertical axis (e.g., a folding axis 893). The electronic device 300 may include a first housing 810, a second housing 820, and a hinge structure 830. For example, the hinge structure 830 may rotatably couple the first housing 810 to the second housing 820 with respect to the folding axis 893. A display 802 (e.g., a flexible display) may be divided into a first display area 851 and a second display area 852 with respect to the folding axis 893. The first display area 851 may correspond to a side of the first housing 810. The second display area 852 may correspond to a side of the second housing 820.

In a state 891, a first direction 861 toward which the first display area 851 faces may correspond to a second direction 862 toward which the second display area 852 faces. The state 891 may be referred to as an unfolded state. The state 891 may be an example of a first state of the electronic device 300.

In the state 891, a processor 310 may identify a state of the electronic device 300 as the first state. The processor 310 may identify that an actuator 330 is being driven while the state of the electronic device 300 is the first state. Based on identifying that the actuator 330 is being driven, the processor 310 may identify a first resonant frequency of the electronic device 300 (or the actuator 330) while the state of the electronic device 300 is the first state. Based on identifying that the actuator 330 is being driven, the processor 310 may perform the operation 620 to the operation 695 illustrated in FIG. 6. In the state 891, the processor 310 may drive the actuator 330 in a first frequency range including the identified first resonant frequency.

In a state 892, the first direction 861 toward which the first display area 851 faces may be opposite to the second direction 862 toward which the second display area 852 faces. The state 892 may be referred to as a folded state. The state 892 may be an example of the second state of the electronic device 300.

In the state 892, the processor 310 may identify the state of the electronic device 300 as the second state. The processor 310 may identify that the actuator 330 is being driven while the state of the electronic device 300 is the second state. Based on identifying that the actuator 330 is being driven, the processor 310 may identify a second resonant frequency of the electronic device 300 (or the actuator 330) while the state of the electronic device 300 is the second state. Based on identifying that the actuator 330 is being driven, the processor 310 may perform the operation 620 to the operation 695 illustrated in FIG. 6. In the state 892, the processor 310 may drive the actuator 330 in a second frequency range including the identified second resonant frequency.

FIG. 9 illustrates an example of an electronic device including an actuator, according to an embodiment.

Referring to FIG. 9, an electronic device 300 may be a foldable device that is folded along a horizontal axis (e.g., a folding axis 993). The electronic device 300 may include a first housing 910, a second housing 920, and a hinge structure 930. For example, the hinge structure 930 may rotatably couple the first housing 910 to the second housing 920 with respect to the folding axis 993. A display 902 (e.g., a flexible display) may be divided into a first display area 951 and a second display area 952 with respect to the folding axis 993. The first display area 951 may correspond to a side of the first housing 910. The second display area 952 may correspond to a side of the second housing 920.

The electronic device 300 may be folded such that the display 902 faces the outside. For example, in a folded state (e.g., a state 992), the first display area 951 and the second display area 952 may be spaced apart from each other. In the folded state, the display 902 may function as a portion of an exterior of the electronic device 200. According to an embodiment, similar to the electronic device 300 illustrated in FIG. 8, in the folded state, the first display area 951 and the second display area 952 of the display 902 may also be in contact with each other.

In a state 991, a first direction 961 toward which the first display area 951 faces may correspond to a second direction 962 toward which the second display area 952 faces. The state 991 may be referred to as an unfolded state. The state 991 may be an example of a first state of the electronic device 300.

In the state 991, a processor 310 may identify a state of the electronic device 300 as the first state. The processor 310 may identify that an actuator 330 is being driven while the state of the electronic device 300 is the first state. Based on identifying that the actuator 330 is being driven, the processor 310 may identify a first resonant frequency of the electronic device 300 (or the actuator 330) while the state of the electronic device 300 is the first state. Based on identifying that the actuator 330 is being driven, the processor 310 may perform the operation 620 to the operation 695 illustrated in FIG. 6. In the state 991, the processor 310 may drive the actuator 330 in a first frequency range including the identified first resonant frequency.

In the state 992, the first direction 961 toward which the first display area 951 faces may be opposite to the second direction 962 toward which the second display area 952 faces. The state 992 may be referred to as a folded state. The state 992 may be an example of a second state of the electronic device 300.

In the state 992, the processor 310 may identify the state of the electronic device 300 as the second state. The processor 310 may identify that the actuator 330 is being driven while the state of the electronic device 300 is the second state. Based on identifying that the actuator 330 is being driven, the processor 310 may identify a second resonant frequency of the electronic device 300 (or the actuator 330) while the state of the electronic device 300 is the second state. Based on identifying that the actuator 330 is being driven, the processor 310 may perform the operation 620 to the operation 695 illustrated in FIG. 6. In the state 992, the processor 310 may drive the actuator 330 in a second frequency range including the identified second resonant frequency.

FIG. 10 illustrates an example of an electronic device including an actuator, according to an embodiment.

Referring to FIG. 10, an electronic device 300 may be a rollable device that provides an extended position and a retracted position. The electronic device 300 may include a first housing 1010, a second housing 1020, and driving circuitry (not illustrated). For example, the driving circuitry may be configured to move the second housing 1020 relative to the first housing 1010. For example, in the retracted position, the second housing 1020 may be retracted into an interior of the first housing 1010. In the extended position, the second housing 1020 may be withdrawn from the first housing 1010. For example, the second housing 1020 (or a portion of the second housing 1020) may slide out or slide in with respect to the first housing 1010.

A display 1002 (e.g., a flexible display) may be coupled to the first housing 1010 and the second housing 1020 such that a display area 1050 (or a size of the display area 1050) of the display 1002 is changed as the second housing 1020 moves between the retracted position and the extended position. For example, according to the extended position and the retracted position, the display 1002 may be retracted into or withdrawn from a side surface 1013 of the first housing 1010. For example, according to the extended position and the retracted position, the display 1002 may be retracted into or withdrawn from a side surface 1014 of the second housing 1020. For example, as the second housing 1020 slides out with respect to the first housing 1010, a portion of the display 1002 may be extended outside the first housing 1010 or the second housing 1020. As the second housing 1020 slides in with respect to the first housing 1010, a portion of the display 1002 may be retracted into an interior of the first housing 1010 or the second housing 1020.

A size of the display area 1050 of the display 1002 may be changed according to the retracted position and the extended position. The display area 1050 of the display 1002 may have the smallest size in the retracted position. The display area 1050 of the display 1002 may have the largest size in the extended position.

A state 1091 may be a state in which the second housing 1020 is slid out with respect to the first housing 1010. The state 1091 may be referred to as the extended position. The state 1091 may be an example of a first state of the electronic device 300.

In the state 1091, the processor 310 may identify a state of the electronic device 300 as the first state. The processor 310 may identify that an actuator 330 is being driven while the state of the electronic device 300 is the first state. Based on identifying that the actuator 330 is being driven, the processor 310 may identify a first resonant frequency of the electronic device 300 (or the actuator 330) while the state of the electronic device 300 is the first state. Based on identifying that the actuator 330 is being driven, the processor 310 may perform the operation 620 to the operation 695 illustrated in FIG. 6. In the state 1091, the processor 310 may drive the actuator 330 in a first frequency range including the identified first resonant frequency.

A state 1092 may be a state in which the second housing 1020 is slid in with respect to the first housing 1010. The state 1092 may be referred to as the retracted position. The state 1092 may be an example of a second state of the electronic device 300.

In the state 1092, the processor 310 may identify the state of the electronic device 300 as the second state. The processor 310 may identify that the actuator 330 is being driven while the state of the electronic device 300 is the second state. Based on identifying that the actuator 330 is being driven, the processor 310 may identify the second resonant frequency of the electronic device 300 (or the actuator 330) while the state of the electronic device 300 is the second state. Based on identifying that the actuator 330 is being driven, the processor 310 may perform the operation 620 to the operation 695 illustrated in FIG. 6. In the state 1092, the processor 310 may drive the actuator 330 in a second frequency range including the identified second resonant frequency.

The technical problems to be achieved in the present document are not limited to those described above, and other technical problems not mentioned herein will be clearly understood by those having ordinary knowledge in the art to which the present document belongs, from the following description.

According to an embodiment, an electronic device (e.g., the electronic device 300) may include a plurality of housings, a microphone (e.g., the microphone 340), an actuator (e.g., the actuator 330), and a processor operably coupled with the microphone and the actuator. The processor may be configured to identify, based on a position relationship of the plurality of housings, a state of the electronic device. The processor may be configured to, based on the state of the electronic device being a first state, drive the actuator in a first frequency range identified through the microphone. The processor may be configured to, based on the state of the electronic device being a second state, drive the actuator in a second frequency range distinct from the first frequency range, identified through the microphone.

According to an embodiment, the processor may be configured to identify the state of the electronic device as one of the first state that the position relationship of the plurality of housings is a first position relationship and the second state that the position relationship of the plurality of housings is a second position relationship.

According to an embodiment, the processor may be configured to drive the actuator while the state of the electronic device is the first state. The processor may be configured to identify a first resonant frequency based on a volume of sound obtained using the microphone while the actuator is being driven.

According to an embodiment, the processor may be configured to drive the actuator while the state of the electronic device is the second state. The processor may be configured to identify a second resonant frequency based on a volume of sound obtained using the microphone while the actuator is being driven.

According to an embodiment, the first frequency range may include the first resonant frequency. The second frequency range may include the second resonant frequency.

According to an embodiment, the processor may be configured to identify the first resonant frequency based on a first reference frequency and an adjusting frequency, while the state of the electronic device is the first state.

According to an embodiment, the processor may be configured to identify the second resonant frequency based on a second reference frequency and the adjusting frequency distinct from the first reference frequency, while the state of the electronic device is the second state.

According to an embodiment, the electronic device may include a power management integrated circuit. The processor may be configured to control the actuator through the power management integrated circuit.

According to an embodiment, the plurality of housings may include a first housing (e.g., the first housing 1010 of FIG. 10), and a second housing (e.g., the second housing 1020 of FIG. 10) configured to movably engage with the first housing between a retracted position and an extended position. The electronic device may include a flexible display coupled to the first housing and the second housing such that a size of a display area is changed as the second housing is moved between the retracted position and the extended position, and driving circuitry configured to move the second housing with respect to the first housing.

According to an embodiment, the plurality of housings may include a first housing (e.g., the first housing 810 of FIG. 8), and a second housing (e.g., the second housing 820 of FIG. 8). The electronic device may include a hinge structure (e.g., the hinge structure 830 of FIG. 8) rotatably coupling the first housing to the second housing with respect to a first folding axis, and a flexible display including a first display area corresponding to a side of the first housing and a second display area corresponding to a side of the second housing divided with respect to the folding axis.

According to an embodiment, a method performed by an electronic device may include identifying, based on a position relationship of a plurality of housings of the electronic device, a state of the electronic device. The method may include, based on the state of the electronic device being a first state, driving an actuator in a first frequency range identified through a microphone of the electronic device. The method may include, based on the state of the electronic device being a second state, driving the actuator in a second frequency range distinct from the first frequency range, identified through the microphone.

According to an embodiment, the method may include identifying the state of the electronic device as one of the first state that the position relationship of the plurality of housings is a first position relationship and the second state that the position relationship of the plurality of housings is a second position relationship.

According to an embodiment, the method may include driving the actuator while the state of the electronic device is the first state. The method may include identifying a first resonant frequency based on a volume of sound obtained using the microphone while the actuator is being driven.

According to an embodiment, the method may include driving the actuator while the state of the electronic device is the second state. The method may include identifying a second resonant frequency based on a volume of sound obtained using the microphone while the actuator is being driven.

According to an embodiment, the first frequency range may include the first resonant frequency. The second frequency range may include the second resonant frequency.

According to an embodiment, the method may include identifying the first resonant frequency based on a first reference frequency and an adjusting frequency, while the state of the electronic device is the first state.

According to an embodiment, the method may include identifying the second resonant frequency based on a second reference frequency and the adjusting frequency distinct from the first reference frequency, while the state of the electronic device is the second state.

According to an embodiment, the method may include controlling the actuator through a power management integrated circuit of the electronic device.

According to an embodiment, the plurality of housings may include a first housing, and a second housing. The electronic device may include a hinge structure rotatably coupling the first housing to the second housing with respect to a first folding axis, and a flexible display including a first display area corresponding to a side of the first housing and a second display area corresponding to a side of the second housing divided with respect to the folding axis.

According to an embodiment, a non-transitory computer readable storage medium may store one or more programs. The one or more programs may include instructions, which, when being executed by a processor of an electronic device with a plurality of housings, a microphone, and an actuator, cause the electronic device to identify, based on a position relationship of the plurality of housings, a state of the electronic device. The one or more programs may include instructions, which, when being executed by the processor, cause the electronic device to, based on the state of the electronic device being a first state, drive the actuator in a first frequency range identified through the microphone. The one or more programs may include instructions, which, when being executed by the processor, cause the electronic device to, based on the state of the electronic device being a second state, drive the actuator in a second frequency range distinct from the first frequency range, identified through the microphone.

According to an embodiment, an electronic device may include a plurality of housings, a microphone, an actuator, at least one processor including processing circuitry, and memory including one or more storage media, storing instructions. The instructions, when executed by the at least one processor individually or collectively, may cause the electronic device to identify, based on a position relationship of the plurality of housings, a state of the electronic device. The instructions, when executed by the at least one processor individually or collectively, may cause the electronic device to, based on the state of the electronic device being a first state, drive the actuator in a first frequency range identified through the microphone. The instructions, when executed by the at least one processor individually or collectively, may cause the electronic device to, based on the state of the electronic device being a second state, drive the actuator in a second frequency range distinct from the first frequency range, identified through the microphone.

For example, the instructions, when executed by the at least one processor individually or collectively, may cause the electronic device to identify the state of the electronic device as one of the first state that the position relationship of the plurality of housings is a first position relationship and the second state that the position relationship of the plurality of housings is a second position relationship.

For example, the instructions, when executed by the at least one processor individually or collectively, may cause the electronic device to drive the actuator while the state of the electronic device is the first state. The instructions, when executed by the at least one processor individually or collectively, may cause the electronic device to identify a first resonant frequency based on a volume of sound obtained using the microphone while the actuator is being driven.

For example, the instructions, when executed by the at least one processor individually or collectively, may cause the electronic device to drive the actuator while the state of the electronic device is the second state. The instructions, when executed by the at least one processor individually or collectively, may cause the electronic device to identify a second resonant frequency based on a volume of sound obtained using the microphone while the actuator is being driven.

For example, the first frequency range may include the first resonant frequency. The second frequency range may include the second resonant frequency.

For example, the instructions, when executed by the at least one processor individually or collectively, may cause the electronic device to identify the first resonant frequency based on a first reference frequency and an adjusting frequency, while the state of the electronic device is the first state.

For example, the instructions, when executed by the at least one processor individually or collectively, may cause the electronic device to identify the second resonant frequency based on a second reference frequency and the adjusting frequency distinct from the first reference frequency, while the state of the electronic device is the second state.

For example, the electronic device may include a power management integrated circuit. The instructions, when executed by the at least one processor individually or collectively, may cause the electronic device to control the actuator through the power management integrated circuit.

For example, the plurality of housings may include a first housing, and a second housing configured to movably engage with the first housing between a retracted position and an extended position. The electronic device may include a flexible display coupled to the first housing and the second housing such that a size of a display area is changed as the second housing is moved between the retracted position and the extended position, and driving circuitry configured to move the second housing with respect to the first housing.

For example, the plurality of housings may include a first housing, and a second housing. The electronic device may include a hinge structure rotatably coupling the first housing to the second housing with respect to a first folding axis, and a flexible display including a first display area corresponding to a side of the first housing and a second display area corresponding to a side of the second housing divided with respect to the folding axis.

According to an embodiment, a method performed by an electronic device may include identifying, based on a position relationship of a plurality of housings of the electronic device, a state of the electronic device. The method may include, based on the state of the electronic device being a first state, driving an actuator in a first frequency range identified through a microphone of the electronic device. The method may include, based on the state of the electronic device being a second state, driving the actuator in a second frequency range distinct from the first frequency range, identified through the microphone.

For example, the method may include identifying the state of the electronic device as one of the first state that the position relationship of the plurality of housings is a first position relationship and the second state that the position relationship of the plurality of housings is a second position relationship.

For example, the method may include driving the actuator while the state of the electronic device is the first state. The method may include identifying a first resonant frequency based on a volume of sound obtained using the microphone while the actuator is being driven.

For example, the method may include driving the actuator while the state of the electronic device is the second state. The method may include identifying a second resonant frequency based on a volume of sound obtained using the microphone while the actuator is being driven.

According to an embodiment, a non-transitory computer readable storage medium may store one or more programs. The one or more programs may include instructions, which, when being executed by a processor of an electronic device with a plurality of housings, a microphone, and an actuator, cause the electronic device to identify, based on a position relationship of the plurality of housings, a state of the electronic device. The one or more programs may include instructions, which, when being executed by the processor, cause the electronic device to, based on the state of the electronic device being a first state, drive the actuator in a first frequency range identified through the microphone. The one or more programs may include instructions, which, when being executed by the processor, cause the electronic device to, based on the state of the electronic device being a second state, drive the actuator in a second frequency range distinct from the first frequency range, identified through the microphone.

The effects that can be obtained from the present disclosure are not limited to those described above, and any other effects not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a plurality of housings;
a microphone;
an actuator;
at least one processor comprising processing circuitry; and
memory comprising one or more storage media, storing instructions,
wherein the instructions, when executed by the at least one processor individually or collectively, cause the electronic device to:
identify, based on a position relationship of the plurality of housings, a state of the electronic device,
based on the state of the electronic device being a first state, drive the actuator in a first frequency range identified through the microphone, and
based on the state of the electronic device being a second state, drive the actuator in a second frequency range distinct from the first frequency range, identified through the microphone.

2. The electronic device of claim 1, wherein the instructions, when executed by the at least one processor individually or collectively, cause the electronic device to identify the state of the electronic device as one of the first state that the position relationship of the plurality of housings is a first position relationship and the second state that the position relationship of the plurality of housings is a second position relationship.

3. The electronic device of claim 2, wherein the instructions, when executed by the at least one processor individually or collectively, cause the electronic device to:
drive the actuator while the state of the electronic device is the first state, and
identify a first resonant frequency based on a volume of sound obtained using the microphone while the actuator is being driven.

4. The electronic device of claim 3, wherein the instructions, when executed by the at least one processor individually or collectively, cause the electronic device to:
drive the actuator while the state of the electronic device is the second state, and
identify a second resonant frequency based on a volume of sound obtained using the microphone while the actuator is being driven.

5. The electronic device of claim 4, wherein the first frequency range includes the first resonant frequency, and
wherein the second frequency range includes the second resonant frequency.

6. The electronic device of claim 5, wherein the instructions, when executed by the at least one processor individually or collectively, cause the electronic device to identify the first resonant frequency based on a first reference frequency and an adjusting frequency, while the state of the electronic device is the first state.

7. The electronic device of claim 6, wherein the instructions, when executed by the at least one processor individually or collectively, cause the electronic device to identify the second resonant frequency based on a second reference frequency and the adjusting frequency distinct from the first reference frequency, while the state of the electronic device is the second state.

8. The electronic device of claim 1, wherein the electronic device further comprises a power management integrated circuit, and
wherein the instructions, when executed by the at least one processor individually or collectively, cause the electronic device to control the actuator through the power management integrated circuit.

9. The electronic device of claim 1, wherein the plurality of housings comprise:
a first housing, and
a second housing configured to movably engage with the first housing between a retracted position and an extended position,
wherein the electronic device further comprises
a flexible display coupled to the first housing and the second housing such that a size of a display area is changed as the second housing is moved between the retracted position and the extended position, and
driving circuitry configured to move the second housing with respect to the first housing.

10. The electronic device of claim 1, wherein the plurality of housings comprise:
a first housing, and
a second housing, and
wherein the electronic device further comprises:
a hinge structure rotatably coupling the first housing to the second housing with respect to a first folding axis, and
a flexible display including a first display area corresponding to a side of the first housing and a second display area corresponding to a side of the second housing divided with respect to the folding axis.

11. A method performed by an electronic device, comprising:
identifying, based on a position relationship of a plurality of housings of the electronic device, a state of the electronic device,
based on the state of the electronic device being a first state, driving an actuator of the electronic device in a first frequency range identified through a microphone of the electronic device, and
based on the state of the electronic device being a second state, driving the actuator in a second frequency range distinct from the first frequency range, identified through the microphone.

12. The method of claim 11, wherein the method further comprises identifying the state of the electronic device as one of the first state that the position relationship of the plurality of housings is a first position relationship and the second state that the position relationship of the plurality of housings is a second position relationship.

13. The method of claim 12, wherein the method further comprises:
driving the actuator while the state of the electronic device is the first state, and
identifying a first resonant frequency based on a volume of sound obtained using the microphone while the actuator is being driven.

14. The method of claim 13, wherein the method further comprises:
driving the actuator while the state of the electronic device is the second state, and
identifying a second resonant frequency based on a volume of sound obtained using the microphone while the actuator is being driven.

15. A non-transitory computer readable storage medium storing one or more programs, wherein the one or more programs comprising instructions, which, when being executed by a processor of an electronic device with a plurality of housings, a microphone, and an actuator, cause the electronic device to:
identify, based on a position relationship of the plurality of housings, a state of the electronic device,
based on the state of the electronic device being a first state, drive the actuator in a first frequency range identified through the microphone, and
based on the state of the electronic device being a second state, drive the actuator in a second frequency range distinct from the first frequency range, identified through the microphone.
